# EUROPEAN PATENT APPLICATION

(11) **EP 4 438 562 A1**
(43) Date of publication of application: **02.10.2024**
(21) Application number: 23165583.8
(22) Date of filing: 30.03.2023
(51) Int. Cl.: C01G 41/02, C22B 3/08, C22B 3/18, C22B 34/12, C22B 34/22, C22B 34/24, C22B 34/36, C22C 32/00, B22F 1/054, B22F 9/16, B22F 9/00, C04B 35/01, C22C 1/04, C22C 27/04

(54) **NEW TUNGSTEN NANOPARTICLES AND PREPARATION METHOD THEREOF**

(71) Applicant: GS Bavaria GmbH, 90439 Nürnberg (DE)
(72) Inventor: The designation of the inventor has not yet been filed
(74) Representative: Weickmann & Weickmann PartmbB

(57) **Abstract**

The present invention refers to a process for preparing nanoparticles of tungsten, tungsten compounds, titanium, vanadium or tantalum through recycling of products of heavy-metal alloys, hard-metal alloys, tungsten comprising material and/or hard-metal comprising material, the nanoparticles of tungsten, tungsten compounds, titanium, vanadium or tantalum obtained by this process and a plastic comprising the nanoparticles of tungsten, tungsten compounds, titanium, vanadium or tantalum.

## Description

The present invention refers to a process for preparing nanoparticles of tungsten, tungsten compounds, titanium, vanadium or tantalum through recycling of products of heavy-metal alloys, hard-metal alloys, tungsten comprising material and/or hard-metal comprising material, the nanoparticles of tungsten, tungsten compounds, titanium, vanadium or tantalum obtained by this process and a plastic comprising the nanoparticles of tungsten, tungsten compounds, titanium, vanadium or tantalum.

In recent years, the market for nanotechnology, and - resulting therefrom - nanoparticles, has gained increasing importance for the development of new products and applications. Materials with particle sizes in the nano and submicron range have become an indispensable part of everyday life, be it as additives in electronics, consumer and household products, construction materials, or materials of the energy, medicine and/or agriculture sector.

The addition of nanoparticles of tungsten, tungsten compounds, titanium, vanadium or tantalum to various carrier materials such as polymers, plastics, resins, or textiles, enables the production of materials with unique characteristics, e.g., chemical, temperature, and/or corrosion resistance, heat and/or electrical conductivity, photocatalytic properties in the visible (400-800 nm) and UV (100-400 nm) light range, toughness, and/or radioactivity shielding characteristics.

Usually, tungsten-based nanoparticles are synthesized from tungsten salts by energy-intensive physical and chemical processes, such as sonoelectrochemical processes. However, particularly in times of increasing resource scarcity and enhanced environmental pollution, recycling processes are becoming more and more important. Nowadays, nearly 30% of the world tungsten supply is provided by recycling.

Several approaches have been made to provide resource- and energy-saving processes for tungsten recycling.

Common, industrially applied tungsten recycling processes use sintered or not-sintered hard-metal alloy scrap as starting material, which is either thermally and/or electrolytically treated. However, disadvantages of these processes are a high energy consumption and/or the need of time- and cost-intensive final milling processes for nanoparticle generation, e.g., by the use of ball mills. In addition, only certain source materials can be used, such as tungsten-cobalt alloys or alloys of tungsten, titanium and/or tantalum, limiting the recycling possibilities.

WO 2012/113917 A1 discloses a process for hard material recovery, which are present in a residue quantity, which is in a free-flowing or pourable form, of a hard metal which has a matrix consisting of a steel, of nickel or of a nickel alloy, in which the hard material particles are embedded, comprising the following steps:
- pouring the residue quantity into an acid bath, containing a strong acid with a pKa < 4 at room temperature,
- adding an oxidant to the acid bath,
- dissolving the matrix of the residue quantity, and
- depositing the hard material particles contained in the acid bath after dissolving the matrix.

The matrix of the residual amount is dissolved, while the hard material particles are not changed in size or composition. The particle size therefore depends on the particle size of the starting material and cannot be changed.

Kojima T. et al.; "Recycling process of WC-Co cermets by hydrothermal treatment", in Journal of Material Science, Vol. 40, no. 19, pages 5167-5172, discloses parameters for recycling processes of WC-Co cermets through hydrothermal treatment methods. Nanoparticle size can be varied by final milling processes. However, such processes are time- and energy-intensive.

JP 2009 249 415 A discloses a process and a device for the preparation of a powdery polymer by milling a polymeric granulate. Therefore, a rotating barrel unit is used. No nanoparticles can be prepared.

EP 3 138 932 B1 discloses a method and an apparatus for the production of a powder consisting of particles of tungsten or of tungsten compounds with a particle size in the nano, micron or submicron range, especially of W, WO₃, WC, WC-TiC, WC-TaC or WC-TiC-TaC, through recycling of products of heavy metals' or hard metals' alloys by using a horizontally rotating reactor vessel. Finally, the obtained nanopowder needs to be desagglomerated and purified from surfactant layers of oleic acid, palmitic acid, imidazoline oleyl alcohol using essential time-, and energy-intensive milling or ultrasound processes. In addition, for the production of W, WC, WC-TiC, WC-TaC or WC-TiC-TaC nanoparticles, a stabilization solution is added during the milling or ultrasound process, leading to stabilizer coated nanoparticles.

All prior art processes have in common that the preparation of nanoparticles through recycling requires enormous amounts of energy and/or time. Further disadvantages are that the final nanoparticles are limited in their size and/or composition and/or are coated with stabilizers.

In view of sustainability considerations and energy savings, there is an urgent need to provide nanoparticles in a more straightforward recycling process.

Surprisingly, a more cost, energy and time efficient process for preparing nanoparticles of tungsten, tungsten compounds, titanium, vanadium or tantalum has been found which moreover confers improved characteristics, such as a small nanoparticle diameter of 15 nm to 500 nm, preferably 30 nm to 500 nm, and/or an uniform size distribution, to such prepared nanoparticles.

It was particularly surprising that a combination of dispersion steps and sedimentation and/or centrifugation steps enabled the generation of nanoparticles with a number weighted average of 30-400 nm. Contrary to the prior art, this does not necessitate an additional milling and/or ultrasound desagglomeration process step.

Thus, in a first aspect, the present invention is directed to a process for preparing nanoparticles of tungsten, tungsten compounds, titanium, vanadium or tantalum through recycling of products of heavy-metal alloys, hard-metal alloys, tungsten comprising material and/or hard-metal comprising material, comprising the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid, and
F) drying the suspension obtained in step E) to form nanoparticles of tungsten, tungsten compounds, titanium, vanadium or tantalum, preferably by spray drying and/or fluid bed drying.

Throughout the invention the preparation of tungsten and/or tungsten compound nanoparticles is especially preferred, in particular tungsten nanoparticles.

"Nanoparticle" in the sense of the present invention refers to a particle with a particle diameter between 1-600 nm, preferably 20-500 nm, more preferably 30-100 nm.

Further, the nanoparticles in the sense of the present invention may form aggregates of at least two to several thousand nanoparticles with a number weighted average of 30-400 nm, preferably 50-250 nm, more preferably 60-80 nm, most preferably 60 nm (D10: 50 nm, D50: 60 nm, D90: 90 nm) and a distribution width of 10-200 nm, measured by laser diffraction, and/or a volume weighted average of 50-15000 nm, preferably 100-10000 nm (D10: 500 nm, D50: 3000 nm, D90: 10000 nm) and a distribution width of 100-10000 nm, measured by laser diffraction, and/or a specific particle surface of 0.2-10 m²/g, preferably 0.2-8 m²/g, measured by BET method.

D10 relates to 10% of particles have a diameter smaller or equal than the given value, D50 relates to 50% of particles have a diameter smaller or equal than the given value, D90 relates to 90% of particles have a diameter smaller or equal than the given value.

The number weighted average relates to tungsten or tungsten carbide and is preferably measured by laser diffraction.

The volume weighted average relates to tungsten or tungsten carbide and is preferably measured by laser diffraction. Laser diffraction as well as BET methods are well known to the person skilled in the art.

Nanoparticles of tungsten compounds are preferably selected from the group consisting of W, WC, WO₃, WC-TiC, WC-TaC, and/or WC-TiC-TaC, preferably W, WC and/or WO₃ as well as mixtures thereof.

"Recycling" in the sense of the present invention refers generally to the preparation of nanoparticles of tungsten, tungsten compounds, titanium, vanadium or tantalum by reprocessing products of heavy-metal alloys, hard-metal alloys, tungsten comprising material and/or hard-metal comprising material according to steps A) to F).

The products of heavy-metal alloys used in step B) are preferably selected from the group consisting of alloys of tungsten, such as tungsten-nickel-iron (W-Ni-Fe), tung-sten-nickel-copper (W-Ni-Cu), WC-Co, WC-TiC-(TaC)-Co, and/or mixtures thereof.

The products of hard-metal alloys used in B) are preferably selected from the group consisting of alloys of W (tungsten), Ti (titanium), V (vanadium), Ta (tantalum), Cr (chromium), Mo (molybdenum), Zr (zirconium), Hf (hafnium), Nb (niobium), Fe (iron), Co (cobalt), Ni (nickel), and/or mixtures thereof.

The tungsten comprising material and/or hard-metal comprising material are preferably selected from the group consisting of tungsten scrap and/or hard-metal scrap.

The hard-metals are preferably selected from the group consisting of W (tungsten), Ti (titanium), V (vanadium), Ta (tantalum), Cr (chromium), Mo (molybdenum), Zr (zirconium), Hf (hafnium), Nb (niobium), Fe (iron), Co (cobalt), Ni (nickel), and/or mixtures thereof.

The dispersing liquid prepared in step A) preferably comprises
i) 65-85 wt-% distilled water,
ii) 0-1 wt-% sulfuric acid,
iii) 5-15 wt-% Fe(II)-sulfate,
iv) 10-30 wt-% activated carbon, based on the total weight of the dispersing liquid, and
v) oxidatively active bacteria.

The dispersing liquid is preferably an acid solution, more preferably a sulfuric acid solution.

The sulfuric acid (ii) is preferably used to adjust the pH of the dispersing liquid. Usually, the pH of the dispersing liquid is in the range of 1.0-3.0, preferably 1.5-2.5.

Further, the dispersing liquid has preferably a high oxidation potential, suitable for degradation of products of heavy-metal alloys, hard-metal alloys, tungsten comprising material and/or hard-metal comprising material according to step B).

The dispersing liquid is preferably prepared by bacterial metabolism, wherein the bacteria are selected from the group consisting of acidithiobacillus ferrooxidans, acidithiobacillus thiooxidans, leptospirillum ferrooxidans, ferroplasma acidiphilum and any mixtures thereof. The selected bacteria are biochemically and/or oxidatively active. The bacteria may catalyze oxidation of Fe(II) (Fe²⁺) to Fe(III) (Fe³⁺). Thereby, the bacteria form bioorganic complexes of trivalent iron Fe³⁺ and exopolymers, wherein the exopolymers are produced extracellularly by the bacteria on the outer side of the bacterial cell membrane.

The bacteria are preferably immobilized on a solid, porous material, such as activated carbon or activated carbon with glauconite. By immobilizing the bacteria on the solid, porous material, the concentration of the bacteria is significantly increased.

The defined ratio of i):ii):iii) is preferably 75-0-25 to 90-0-10, more preferably 85-0-15.

Preferably, the dispersing liquid comprises Fe(III)-sulfate in a concentration from 5-30 g/l, preferably 7-20 g/l, further bioorganic complexes of Fe³⁺ and exopolymers, wherein the exopolymers are produced extracellularly by the bacteria on the outer side of the bacterial cell membrane.

To increase the rate of iron oxidation catalyzed by the bacteria and/or to increase the growth rate of the bacteria in the dispersing liquid, ammonium trisodiumphosphate ((NH₄)₃PO₄ · H₂O) may be added to step A).

The optimal temperature range for iron oxidation catalyzed by the bacteria is between 20-35 °C, preferably 25-30 °C. The temperature is controlled preferably by a thermostat.

In step B), the liquid dispersion obtained after step A) is continuously mixed with heavy-metal alloys, hard-metal alloys, tungsten comprising material and/or hard-metal comprising material, preferably at a pH in the range of 1.6 to 2.5, more preferably 1.9 to 2.3 and/or preferably at a temperature in the range of 15°C to 30°C, more preferably room temperature, for a time period of at least five days, preferably 10 to 20 days.

The ratio of the weight W_{M} of the heavy-metal alloys, hard-metal alloys, tungsten comprising material and/or hard-metal comprising material to the weight W_{L} of the dispersing liquid in step B) is preferably 2.5 ≤ W_{M}/W_{L}≤ 3.0.

The products of heavy-metal alloys, hard-metal alloys, tungsten comprising material and/or hard-metal comprising material have preferably a length of ≤ 6 cm and a width of ≤ 6 cm. Individual parts may be pre-ground before applying in step B).

Sulfuric acid is preferably added to the mixture of step B) to keep the pH value in the desired range. Preferably, the pH is in the range of 1.6 to 2.5, more preferably 1.9 to 2.3.

The reaction mixture of step B) is preferably stirred and/or rotated in a rotation vessel or a gravity mixer, preferably a drum mixer, tumble mixer, cone mixer or double cone mixer, more preferably a tumble mixer.

The stirring and/or rotating of the products of heavy-metal alloys, hard-metal alloys, tungsten comprising material and/or hard-metal comprising material in preferably a tumble mixer leads to significant tribochemical processes, resulting in a highly dispersed liquid pulp of particles in the nano and submicron range of W, WC, WC-TaC, and/or WC-TiC-TaC.

"Tribochemical processes" in the sense of the present invention refers to the transfer of mechanical energy on the products of heavy-metal alloys, hard-metal alloys, tungsten comprising material and/or hard-metal comprising material by the action of tensile and/or compressive forces, generated during stirring and/or rotating of the mixture from step B) in the rotation vessel or gravity mixer. Thereby, a surface destruction of the products may occur, whereby particles are removed from the surface and solubilized, forming the liquid pulp. Due to the stirring and/or rotating in the rotation vessel or gravity mixer, the liquid pulp acts as an abrasive, promoting further particle solubilization from the surface of the products of heavy-metal alloys, hard-metal alloys, tungsten comprising material and/or hard-metal comprising material into the mixture of B).

The mechanisms for the generation of the liquid pulp may rely on hemo-mechanical and/or Rehbinder effects.

Upon contact with the bioorganic complexes of Fe³⁺ comprised in the dispersing liquid of step A), the hemo-mechanical effect may cause an intensive destruction of the surface of the products of heavy-metal alloys, hard-metal alloys, tungsten comprising material and/or hard-metal comprising material. If Ni, Co and/or Cu are present in the product, these ions solubilize first, resulting in a material and/or alloy surface with multiple defects in crystal structure. The speed of solubilization depends on the concentration of the bioorganic complexes of Fe³⁺ and the temperature. Preferably, the concentration of bioorganic complexes of Fe³⁺ in the mixture according to step B) is 2-4 g/L, more preferably 2.5-3,5 g/L. Further, preferably the temperature is in the range of 18-50 °C, more preferably 25-35 °C.

During the stirring and/or rotating of the mixture of step B) in the rotation vessel or gravity mixer, the products of heavy-metal alloys, hard-metal alloys, tungsten comprising material and/or hard-metal comprising material preferably collide and rub against each other, forming chaotic collision fragments of the products. According to the Rehbinder effect, a surfactant film may be formed on the surface of the product fragments. Upon disruption of this surfactant film due to the stirring and/or rotating in the rotation vessel or gravity mixer, particles in the nano and submicron range of W, WC, WC-TaC, and/or WC-TiC-TaC are released into the mixture of B).

The Rehbinder effect, a well-known effect in physical chemistry, describes that surface-active liquids, such as the dispersing liquid of step A), brought into contact with the surface of metals and/or alloys, markedly diminish the mechanical strength between the surface particles due to the formation of a surfactant film on the surface, resulting in solubilization of particles from the metal and/or alloy surface (Rehbinder and Logghinov, Dok. Acad. Sci. U.S.S.R., 30, 491 (1941); Rehbinder, Lichtman and Maslennikov, *ibid.,* **32,** 125 (1941); Lichtman and Rehbinder, *ibid.,* **32,** 130 (1941); Rehbinder and Wenström, Bull. Acad.Sci. U.S.S.R.,Ser.Phys., No.4/5, 531 (1937); Andrade and Randall, The Rehbinder Effect. Nature 164, 1127 (1949). https://doi.org/10.1038/1641127a0).

In step C), the liquid pulp obtained in step B), is extracted.

Extraction according to step C) may preferably be performed by pumping out the required volume of liquid pulp from the mixture of step B).

Further, extraction according to step C) may preferably be performed after at least 6 days of mixing according to step B), more preferably after 10 days, most preferably after 14 days.

The liquid pulp of step C) preferably comprises 20-60 wt.-% W particles and/or 20-60 wt.-% WC particles in the micron, nano and submicron range, based on the total weight of the liquid pulp. The particles of W and/or WC in the liquid pulp may have a number weighted average of 30-400 nm, preferably 50-250 nm and a distribution width of 10-200 nm, measured by laser diffraction. Further, the particles of W and/or WC in the liquid pulp may have a volume weighted average of 50-15000 nm, preferably 100-10000 nm and a distribution width of 100-10000 nm, measured by laser diffraction. Further, the particles of W and/or WC in the liquid pulp may have a specific particle surface of 0.2-10 m²/g, preferably 0.2-8 m²/g, measured by BET method.

Optionally in step C), the extracted liquid is replenished to its initial volume and/or the heavy-metal alloys, hard-metal alloys, tungsten comprising material and/or hard-metal comprising material are added to their initial weight of starting step B).

In step D), the solid material comprised by the liquid pulp obtained in step C), is washed, preferably with distilled water and/or a suitable acid. More preferably, 5% (v/v) sulfuric acid in water is used.

For this, the solid material of step D) is preferably obtained from the liquid pulp of step C) by centrifugation, sedimentation or filtration.

Sedimentation according to step D) is preferably performed for at least 24 h at a temperature of preferably 18-30 °C.

In a preferred embodiment, step D) includes the following steps:

| | |
|---|---|
| D1) | separating the solid material obtained in step C) |
| D2) | dispersing the solid material obtained after step D1), preferably in distilled water, and/or an aqueous acid solution, preferably aqueous sulfuric acid, |
| D3) | separating the solid material obtained after step D2) from wash water, preferably through sedimentation and/or centrifugation, wherein the sedimentation is performed for 15-40 h, preferably 20-30 h, and/or the centrifugation is performed with 2-1000 rcf, preferably 50-200 rcf, followed by decanting and replenishing washing fluid according to step D2), and |
| D4) | optionally repeating steps D2) and D3) 2-8 times, preferably 3-5 times. |

Preferably, the solid material is dispersed with a 2- to 5-fold, preferably 2- to 3-fold excess of water and/or an aqueous acid solution, preferably aqueous sulfuric acid, in comparison to the initial volume of the liquid pulp.

In a preferred embodiment, the dispersion obtained in step D2) is stirred for 150-350 h, preferably 200-240 h, most preferably 240 h, at a temperature in the range of 30-80 °C, preferably 40-60°C, most preferably 60 °C, to release from the solid material ions preferably selected from the group consisting of Ni-Fe, Ni-Fe-Cu, Co-Fe and/or lanthanoids.

By using suitable acids, substances such as cobalt, copper, iron and/or lanthanum oxide are converted into a soluble form, whereby W or WC is retained as a pure substance in the solid material due to its chemical resistance and/or is partially changed in its chemical composition, but continues to exist as particles.

Thus, in a preferred embodiment, steps D2) and D3) are repeated, until the solid material comprises at least 90 wt.-% of W and/or WC particles, preferably at least 95 wt.-%, more preferably 99 wt.-%, most preferably 99.95 wt.-%, based on the total weight of the solid material.

The solid material of step D) preferably comprises 90-100 wt.-% W particles or 90-100 wt.-% WC particles in the nano- and/or submicron range, based on the total weight of the solid material. The particles of W and/or WC in the solid material may have a number weighted average of 30-400 nm, preferably 50-250 nm and a distribution width of 10-200 nm, measured by laser diffraction. Further, the particles of W and/or WC in the liquid pulp may have a volume weighted average of 50-15000 nm, preferably 100-10000 nm and a distribution width of 100-10000 nm, measured by laser diffraction. Further, the particles of W and/or WC in the solid material may have a specific particle surface of 0.2-10 m²/g, preferably 0.2-8 m²/g, measured by BET method.

In step E), a suspension of the solid material obtained in step D) is prepared, preferably with distilled water and/or a suitable acid. More preferably, 5% (v/v) sulfuric acid in water is used.

The ratio of solid material of tungsten to distilled water and/or the suitable acid in step E) is preferably 30:50 wt.-%, more preferably 35:45 wt.-%, based on the total weight of the suspension.

The ratio of solid material of tungsten carbide to distilled water and/or the suitable acid in step E) is preferably 20:40 wt.-%, more preferably 25:35 wt.-%, based on the total weight of the suspension.

In step F), the suspension obtained in step E) is dried to form nanoparticles of tungsten, tungsten compounds, titanium, vanadium or tantalum, preferably by spray drying and/or fluid bed drying.

The adjustment of the temperature and/or drying time in step F) may enable the production of nanoparticles with customized number weighted average and/or volume weighted average.

Preferably, the nanoparticles obtained in step F) comprise 90-100 wt.-% W or 90-100 wt.-% WC, based on the total weight of the nanoparticles. The nanoparticles of W and/or WC may have a number weighted average of 30-400 nm, preferably 50-250 nm and a distribution width of 10-200 nm, measured by laser diffraction. Further, the particles of W and/or WC may have a volume weighted average of 50-15000 nm, preferably 100-10000 nm and a distribution width of 100-10000 nm, measured by laser diffraction, and/or a specific particle surface of 0.2-10 m²/g, preferably 0.2-8 m²/g, measured by BET method.

In a preferred embodiment, the drying step F) is performed via fluid bed drying or spray drying at a temperature in the range of 160-200 °C, preferably 180 °C for 30 min to 5 h, preferably 1 h to 2 h, most preferably 1 h.

Preferably, an additional oxidizing step is performed to provide WO₃, comprising the step
G) oxidizing the nanoparticles of tungsten, tungsten compounds, titanium, vanadium or tantalum obtained after step F) to WO₃ at temperatures between 300-900, preferably 500-900°C, more preferably 600-800°C, preferably in a batch furnace, muffle furnace or a fluid batch reactor, or
H) oxidizing the solid material directly in the suspension obtained in step E) with Caro's acid, preferably comprising 20-30 wt-% sulfuric acid and 4-10 wt-% hydrogen peroxide, based on the total weight of the suspension, preferably under stirring conditions and optional heating to preferably 60°C.

Thus, in a preferred embodiment, the process of the present invention comprises the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid,
F) drying the suspension obtained in step E) to form nanoparticles of tungsten, tungsten compounds, titanium, vanadium or tantalum, preferably by spray drying and/or fluid bed drying, and
G) oxidizing the nanoparticles of tungsten, tungsten compounds, titanium, vanadium or tantalum to WO₃ at temperatures between 300-900 °C, preferably 500-900 °C, more preferably 600-800 °C, preferably in a batch furnace, muffle furnace or a fluid batch reactor.

Oxidization according to step G) may be performed at low oxidation temperatures, preferably under 1000 °C, more preferably under 900 °C, most preferably at 800 °C, for 20 to 120 min, more preferably 20-40 min under a low oxygen atmosphere to produce blue tungsten oxide (W₁₀O₂₉ or W₅O₁₄).

Further, in a preferred embodiment, the process of the present invention comprises the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid,
H) oxidizing the solid material directly in the suspension obtained in step E) with Caro's acid, preferably comprising 20-30 wt-% sulfuric acid and 4-10 wt-% hydrogen peroxide, based on the total weight of the suspension, preferably under stirring conditions and optional heating to preferably 60°C, and
F) drying the suspension obtained in step H) to form nanoparticles of tungsten, tungsten compounds, titanium, vanadium or tantalum, preferably by spray drying and/or fluid bed drying.

The above process thus, enables a continuous production of nanoparticles of tungsten, tungsten compounds, titanium, vanadium or tantalum through recycling of products of heavy-metal alloys, hard-metal alloys, tungsten comprising material and/or hard-metal comprising material.

The nanoparticles of tungsten, tungsten compounds, titanium, vanadium and/or tantalum are preferably selected from the group consisting of W, WC, WO₃, WC-TiC, WC-TaC, and/or WC-TiC-TaC, preferably W, WC and/or WO₃.

The nanoparticles preferably comprise 90-100 wt.-% W, 90-100 wt.-% WC, or 90-100 wt.-% WO₃, based on the total weight of the nanoparticles.

The nanoparticles preferably comprise 90-100 wt-% W, and optionally 1 wt-% S, and/or 1-3 wt-% Fe, and/or 1 wt-% Cr, and/or 1 wt-% Nb, and/or 1-2 wt-% Ti, and/or 1% Ni.

The nanoparticles may have a number weighted average of 30-400 nm, preferably 50-250 nm and a distribution width of 10-200 nm, measured by laser diffraction. Further, the nanoparticles may have a volume weighted average of 50-15000 nm, preferably 100-10000 nm and a distribution width of 100-10000 nm, measured by laser diffraction, and/or a specific particle surface of 0.2-10 m²/g, preferably 0.2-8 m²/g, measured by BET method.

The nanoparticles obtained after steps F) and/or G) are preferably dispersed in a thermoset polymer or mixed with a thermoplastic polymer. Thus, the present invention comprises an additional step selected from
I) dispersing the nanoparticles obtained after step F) or step G) or steps H) and F) together with a duroplastic thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained after step F) or step G) or steps H) and F) with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.

Thus, in a preferred embodiment, the process of the present invention comprises the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid,
F) drying the suspension obtained in step E) to form nanoparticles of tungsten, tungsten compounds, titanium, vanadium or tantalum, preferably by spray drying and/or fluid bed drying, and
I) dispersing the nanoparticles obtained after step F) together with a duroplastic thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained after step F) with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.

In a further preferred embodiment, the process of the present invention comprises the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid,
F) drying the suspension obtained in step E) to form nanoparticles of tungsten, tungsten compounds, titanium, vanadium or tantalum, preferably by spray drying and/or fluid bed drying,
G) oxidizing the nanoparticles of tungsten, tungsten compounds, titanium, vanadium or tantalum to WO₃ at temperatures between 300-900, preferably 500-900°C, more preferably 600-800°C, preferably in a batch furnace, muffle furnace or a fluid batch reactor, and
I) dispersing the nanoparticles obtained after step G) together with a duroplastic thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained after step G) with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.

Further, in a preferred embodiment, the process of the present invention comprises the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.6 to 2.5, preferably 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
   and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid,
H) oxidizing the solid material directly in the suspension obtained in step E) with Caro's acid, preferably comprising 20-30 wt-% sulfuric acid and 4-10 wt-% hydrogen peroxide, based on the total weight of the suspension, preferably under stirring conditions and optional heating to preferably 60°C,
F) drying the suspension obtained in step H) to form nanoparticles of tung-sten or of tungsten compounds, preferably by spray drying and/or fluid bed drying, and
I) dispersing the nanoparticles obtained after step F) together with a thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained after step F) with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.

The thermoset polymer of step I) is preferably selected from the group consisting of polyesters, vinylesters, epoxy resins, and/or mixtures thereof.

The additives of step I) are preferably selected from the group consisting of copolymers with acidic groups and modified urea.

The rheology agents of step I) are preferably selected from the group consisting of castor oil based thixotropes, hydrophobically modified polyurethanes, hydrophobically modified polyethers, hydrophobically modified alkali swellable emulsions, alkali swellable emulsions, attapulgites, and/or mixtures thereof. The rheology agent is preferably used in an amount of less than 5 wt.-%, based on a total weight of the dispersion mixture.

Step I) is preferably performed in rolling mills. In step I), the distance of the rolling mills is preferably 5-15 Further, in step I), the rotation rate of the rolling mills is preferably 50-300 Thus, the nanoparticles are homogenously milled with the thermoset polymer.

The milled nanoparticles with the thermoset polymer according to step I) may be filled in a suitable container for storage and/or sale.

The thermoplastic polymer of step J) is preferably selected from the group consisting of polyethylene, polypropylene, polyamides, and/or mixtures thereof.

The mixed nanoparticles with the thermoplastic polymer according to step J) may be granulated and preferably filled in a suitable container for storage and/or sale.

The above process thus, enables a continuous production of a plastic.

The plastic according to the invention is in particular a thermosetting plastic or a thermoplastic material.

The present invention shall be further illustrated in more detail but not limited by the following examples.

### Examples

### 1. Preparation of inventive nanoparticles

### 1.1 Step A: Preparation of the dispersing liquid

In the first process step, an acidic solution is prepared (dispersing liquid). This solution is prepared in a reactor by the metabolism of bacteria in an acidic solution with a defined ratio of distilled water, sulfuric acid and Fe(II)-sulfate under addition of activated carbon.

### 1.2 Steps B and C: Mixing step and extraction of a liquid pulp

In a mixer, products of heavy-metal alloys, hard-metal alloys, hard-metal scrap and/or tungsten scrap are continuously mixed at room temperature in a defined ratio with the dispersing liquid from process step A in such a way that friction of the scrap in the moving mixer supports the tungsten removal process. The pH of the mixture in the mixer is checked regularly and, if necessary, kept at the target value by adding sulfuric acid.

After about 14 days, the liquid is drawn off, liquid is replenished in the same quantity, and the scrap is replenished to the original weight. The extracted liquid (a liquid pulp) contains the desired tungsten or tungsten carbide particles. Pulp from mixer after 7 days mixing process: WC: 30-40 wt.-%, W: 30-40 wt.-%, based on the total weight of the liquid pulp.

### 1.3 Steps D and E: Washing and preparation of a suspension

The liquid pulp withdrawn from the mixer is washed. Here, sedimentation and centrifugation are used as alternatives.

In both cases, the particles obtained from the mixer are first largely freed from liquid supernatant and then, depending on the base material, filled up in 3 to 4 washing steps with distilled water or with a suitable acid, redispersed and, after sedimentation or centrifugation, freed again from supernatant (2-3 times the original volume of the liquid pulp, sedimentation for about 24 h, 3-5 runs, 5% sulfuric acid).

After the last washing cycle, the washed material, a solid material, is topped up with distilled water in a ratio that is optimal for the subsequent drying process.

### 1.4 Step F: Drying

The suspension obtained in step E is dried in step F. Here, two processes are basically used alternatively: spray and fluid bed drying. By suitable selection of the process parameters gas temperature, volume flow, entry dispersion (concentration, a defined particle size is achieved here which already meets the customer's requirements to the greatest possible extent), optimal drying can be achieved and nanoparticle diameter, number weighted average, distribution width and volume weighted average can be controlled.

### 1.5 Step G: Oxidation to WO₃ after step F

To produce WO₃, W or WC is oxidized to WO₃, depending on the desired end product. Alternatively, a chamber furnace with air atmosphere or a fluidized bed process is used for this purpose.

In addition to yellow WO₃, blue oxide (W₁₀O₂₉ or W₅O₁₄) can be produced specifically at lower oxidation temperatures and in the absence of oxygen.

Oxidation of W and WC in the muffle furnace: temperature, duration, quantity, runs (800°C, 30 min, 2x30 g, 3 runs).

### 1.6 Step H: Aqueous oxidation to WO₃ after step E

Direct oxidation of the particles in the aqueous phase after process step E and subsequent drying is possible under addition of Caro's acid (sulfuric acid and hydrogen peroxide) in excess under stirring directly in step E.

### 2. Preparation of nanoparticle-polymer compositions

### 2.1 Thermoset polymer

The nanoparticles (W, WC, and/or WO₃) obtained in steps F and/or G/H are dispersed in the selected carrier substance of the polyester, vinylester and/or epoxy resin masterbatch and suitable additives (dispersants, rheological agents <5 wt.-%) in a rolling mill. The proportion of nanoparticles typically varies between 25 wt.-% and 50 wt.-%, based on the total weight of the masterbatch. A suitable rheology agent is added to prevent sedimentation of the particles.

Suitable adjustment of the distance of the rolling mills and suitable adjustment of the rotation rate of the rolling mills enables a homogenous dispersion of the nanoparticles in the thermoset polymer. Further, all particles are brought to a defined size by the milling process.

Parameters: 4 passes: 200 rpm, 15/5 µm, 5 µm/5 N*mm⁻¹, 5 N*mm-¹/8.5 N*mm⁻¹, 8.5 N*mm⁻¹/8.5 N*mm⁻¹, cooling for mill temperatures optionally above 30°C.

The masterbatch is finally filled into suitable containers for storage and/or sale

### 2.2 Thermoplastic polymer

Compounding of W, WC, and/or WO₃ in thermoplastic polymer (polyethylene) in (twin screw) extruder.

Process parameters:
Particle content: 10-50 wt.-% nanopowder, melt zone temperature: 200-250°C, speed: 300-400 rpm, direct feeding of nanopowder and thermoplastic in desired mass ratio, feeding 3-5 kg/h, extrusion in water bath and subsequent pelletizing.

### 3. Process: Recycling of scrap containing tungsten, removal of foreign material

The nanoparticles obtained from process step D or F are cleaned from foreign and accompanying substances. By producing the particle dispersion as described in process steps B and C, foreign and accompanying substances are exposed and become accessible for further chemical or physical treatment.

By using suitable acids, substances such as cobalt, copper or lanthanum oxide solubilize, whereby the tungsten or tungsten carbide is retained as a pure substance due to its chemical resistance or is partially changed in its chemical composition, but continues to exist as particles. The acid used is added in excess and the particle dispersion is stirred for a certain time, heated if necessary. The dissolved accompanying substances are removed following process step D (sedimentation or centrifugation) and the particles are purified. The resulting particle dispersion is further processed according to process steps F and/or G/H.

### 4. Product characteristics of particles obtained after the different process steps

| | Particle size (laser diffraction) [nm] | Width (laser diffraction) [nm] | Composition (X-ray fluorescence spectrometer) | Specific particle surface area (BET method) [m²/g] |
|---|---|---|---|---|
| **Sedimentation** | | | | |
| W | 600 | 400 | 99% W, 1%S | 0.203 |
| WC | 1900 | 1800 | 94% W, 2% Ti, 1% Fe, 1% Cr, 1% Nb | 4-8 |

| **Centrifugation** | | | | |
|---|---|---|---|---|
| W | 50-200 | 100 | 98% W, 1%Fe, 1%S | |
| WC | 50-150 | 100 | 90% W, 3% Fe, 2% Ti, 1% Cr, 1% Nb, 1% S | |

| **Novoflow filtration** | | | | |
|---|---|---|---|---|
| W | 60 | 50 | 98% W, 1% Cr, 1% Fe, | |
| WC | 120 | 100 | 94% W, 1% Cr, 1% Fe, 2% Ti, 1% Nb | |

| **Spray drying** | | | | |
|---|---|---|---|---|
| W | 70 | 30 | 97% W, 1% S, 1% Fe | |
| WC | 50-200 | 70 | 92% W, 2% Ti, 1% Fe, 1% Cr, 1% S | |

| **Masterbatch production (size determined by sedimentation rate)** | | | | |
|---|---|---|---|---|
| W | 150-1500 | 4000-5000 | chem. composition see spray drying and oxidation, solid content 25-50 wt.-% nanopowder. | |
| WC | 70-250 | 700-800 | | |
| WO₃ | 100-400 | 1000 | | |

| **Oxidation in the furnace (after step F)** | | | | |
|---|---|---|---|---|
| From W | 60 | 15 | 99% W, 1%S | 1.43 |
| From WC | 150 | 50 | 99% W | |

| **Oxidation in aqueous medium (in step E)** | | | | |
|---|---|---|---|---|
| From W | 60-200 | 50 | 98% W, 1% Fe, 1% S | |
| From WC | Not possible | | | |

The present invention is further defined by the following items:
1. Process for preparing nanoparticles of tungsten, tungsten compounds, titanium, vanadium or tantalum through recycling of products of heavy-metal alloys, hard-metal alloys, tungsten, titanium, vanadium and/or tantalum comprising material and/or hard-metal comprising material, comprising the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B) and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid, and
F) drying the suspension obtained in step E) to form nanoparticles of tungsten, tungsten compounds, titanium, vanadium or tantalum, preferably by spray drying and/or fluid bed drying.
2. Process according to item 1, wherein the tungsten compounds are selected from the group consisting of W, WC, WO₃, WC-TiC, WC-TaC, and/or WC-TiC-TaC, preferably W, WC and/or WO₃.
3. Process according to any of the preceding items, wherein the tungsten, titanium, vanadium and/or tantalum comprising material and/or hard-metal comprising material are selected from the group consisting of tungsten scrap and/or hard-metal scrap.
4. Process according to any of the preceding items, wherein sulfuric acid is added to the mixture of step B) to keep the pH value in desired range.
5. Process according to any of the preceding items, wherein the solid material of step D) is obtained from the liquid pulp of step C) by centrifugation or sedimentation or filtration.
6. Process according to any of the preceding items, which comprises an additional oxidizing step to provide WO₃ comprising the step
G) oxidizing the nanoparticles of tungsten, tungsten compounds, titanium, vanadium or tantalum to WO₃ at temperatures between 300-900 °C, preferably 500-900 °C, more preferably 600-800 °C, preferably in a batch furnace, muffle furnace or a fluid batch reactor, or
H) oxidizing the solid material directly in the suspension obtained in step E) with Caro's acid, preferably comprising 20-30 wt-% sulfuric acid and 4-10 wt-% hydrogen peroxide, based on the total weight of the suspension, preferably under stirring conditions and optional heating to preferably 60°C.
7. Process according to any of the preceding items, wherein the dispersing liquid of step A) comprises
i) 65-85 wt-% distilled water,
ii) 0-1 wt-% sulfuric acid,
iii) 5-15 wt-% Fe(II)-sulfate,
iv) 10-30 wt-% activated carbon, based on the total weight of the dispersing liquid, and
v) oxidatively active bacteria.
8. Process according to item 7, wherein the ratio of i):ii):iii) is 75-0-25 to 90-0-10, more preferably 85-0-15.
9. Process according to items 7 to 8, wherein the bacteria are selected from the group consisting of acidithiobacillus ferrooxidans, acidithiobacillus thiooxidans, leptospirillum ferrooxidans, ferroplasma acidiphilum and any mixtures thereof.
10. Process according to items 7 to 9, wherein the bacteria are immobilized on activated carbon or on activated carbon with glauconite.
11. Process according to items 7 to 10, wherein the dispersing liquid comprises Fe(III)-sulfate in a concentration from 5-30 g/l, preferably 7-20 g/l, further bioorganic complexes of Fe³⁺ and exopolymers, wherein the exopolymers are produced extracellularly by the bacteria on the outer side of the bacterial cell membrane.
12. Process according to items 7 to 11, wherein the dispersing liquid has a pH in the range of 1-3, preferably 1.5-2.5.
13. Process according to any of the preceding items, wherein the ratio of the weight W_{M} of the heavy-metal alloys, hard-metal alloys, tungsten comprising material and/or hard-metal comprising material to the weight W_{L} of the dispersing liquid in step B) is 2.5 ≤ W_{M}/W_{L}≤ 3.0.
14. Process according to any of the preceding items, wherein the mixture of step B) is stirred and/or rotated in a rotation vessel or gravity mixer, preferably a drum mixer, tumble mixer, cone mixer or double cone mixer, more preferably a tumble mixer.
15. Process according to any of the preceding items, wherein step D) includes the following steps:

| | |
|---|---|
| D1) | separating the solid material obtained in step C) |
| D2) | dispersing the solid material obtained after step D1), preferably in distilled water, and/or an aqueous acid solution, preferably aqueous sulfuric acid, |
| D3) | separating the solid material obtained after step D2) from wash water, preferably through sedimentation and/or centrifugation, wherein the sedimentation is performed for 15-40 h, preferably 20-30 h, and/or the centrifugation is performed with 2-1000 rcf, preferably 50-200 rcf, followed by decanting and replenishing washing fluid according to step D2), and |
| D4) | optionally repeating steps D2) and D3) 2-8 times, preferably 3-5 times. |

16. Process according to any of the preceding items, wherein the dispersion obtained in step D2) is stirred for 150-350 h, preferably 200-240 h, most preferably 240 h, at a temperature in the range of 30-80 °C, preferably 40-60°C, most preferably 60 °C, to release from the solid material ions preferably selected from the group consisting of Ni-Fe, Ni-Fe-Cu, Co-Fe and/or lanthanoids.
17. Process according to any of the preceding items, wherein the drying step is performed via fluid bed drying or spray drying at a temperature in the range of 160-200 °C, preferably 180 °C for 1 h.
18. Process according to any of the preceding items, wherein the solid material obtained in steps C) and D) comprises 90-100 wt.-% particles of W or 90-100 wt.-% particles of WC, based on the total weight of the solid material, wherein the particles of W and/or WC in the solid material may have a number weighted average of 30-400 nm, preferably 50-250 nm and a distribution width of 10-200 nm, measured by laser diffraction. Further, the particles of W and/or WC in the liquid pulp may have a volume weighted average of 50-15000 nm, preferably 100-10000 nm and a distribution width of 100-10000 nm, measured by laser diffraction. Further, the particles of W and/or WC in the solid material may have a specific particle surface of 0,2-10 m²/g, preferably 0,2-8 m²/g, measured by BET method.
19. Process according to any of the preceding items, which comprises an additional step selected from
I) dispersing the nanoparticles obtained according to item 1 or item 6 together with a thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained according to item 1 or item 6 with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.
20. Nanoparticles obtainable by a method according to any of items 1-18.
21. Nanoparticles according to item 20, which have a number weighted average of 30-400 nm, preferably 50-250 nm and a distribution width of 10-200 nm, measured by laser diffraction, and/or a weighted average of 50-15000 nm, preferably 100-10000 nm and a distribution width of 100-10000 nm, measured by laser diffraction, and/or a specific particle surface of 0.2-10 m²/g, preferably 0.2-8 m²/g, measured by BET method.
22. Nanoparticles according to items 20-21, comprising 90-100 wt-% W, and optionally 1 wt-% S, and/or 1-3 wt-% Fe, and/or 1 wt-% Cr, and/or 1 wt-% Nb, and/or 1-2 wt-% Ti, and/or 1% Ni.
23. Plastic comprising a nanoparticle according to any of items 20-22, in particular a thermosetting plastic or thermoplastic material.

## Claims

1. Process for preparing nanoparticles of tungsten, tungsten compounds, titanium, vanadium or tantalum through recycling of products of heavy-metal alloys, hard-metal alloys, tungsten, titanium, vanadium and/or tantalum comprising material and/or hard-metal comprising material, comprising the steps of
A) preparing an acid-containing, preferably sulfuric acid-containing, aqueous dispersing liquid,
B) continuously mixing the dispersing liquid obtained in step A) with heavy-metal alloys, hard-metal alloys, tungsten comprising material and/or hard-metal comprising material at a pH in the range of 1.9 to 2.3 and/or a temperature in the range of 15°C to 30°C, preferably room temperature, for a time period of at least five days, preferably 10 to 20 days, preferably in a rotation vessel,
C) extracting a liquid pulp obtained in step B)
and optionally replenishing the extracted liquid to its initial volume and/or adding heavy-metal alloys, hard-metal alloys, tungsten comprising material and/or hard-metal comprising material to their initial weight of starting step B),
D) washing the solid material comprised by the liquid pulp obtained in step C), preferably with distilled water and/or a suitable acid,
E) preparing a suspension of the solid material obtained in step D), preferably with distilled water and/or a suitable acid, and
F) drying the suspension obtained in step E) to form nanoparticles of tungsten, tungsten compounds, titanium, vanadium or tantalum, preferably by spray drying and/or fluid bed drying.

2. Process according to claim 1, wherein the tungsten compounds are selected from the group consisting of W, WC, WO₃, WC-TiC, WC-TaC, and/or WC-TiC-TaC, preferably W, WC and/or WO₃.

3. Process according to any of the preceding claims, which comprises an additional oxidizing step to provide WO₃ comprising the step
G) oxidizing the nanoparticles of tungsten, tungsten compounds, titanium, vanadium or tantalum to WO₃ at temperatures between 300-900 °C, preferably 500-900 °C, more preferably 600-800 °C, preferably in a batch furnace, muffle furnace or a fluid batch reactor, or
H) oxidizing the solid material directly in the suspension obtained in step E) with Caro's acid, preferably comprising 20-30 wt-% sulfuric acid and 4-10 wt-% hydrogen peroxide, based on the total weight of the suspension, preferably under stirring conditions and optional heating to preferably 60°C.

4. Process according to any of the preceding claims, wherein the dispersing liquid of step A) comprises
vi) 65-85 wt-% distilled water,
vii) 0-1 wt-% sulfuric acid,
viii) 5-15 wt-% Fe(II)-sulfate,
ix) 10-30 wt-% activated carbon, based on the total weight of the dispersing liquid, and
x) oxidatively active bacteria.

5. Process according to claim 4, wherein the bacteria are selected from the group consisting of acidithiobacillus ferrooxidans, acidithiobacillus thiooxidans, leptospirillum ferrooxidans, ferroplasma acidiphilum and any mixtures thereof, wherein the bacteria are preferably immobilized on activated carbon or on activated carbon with glauconite.

6. Process according to claims 4 to 5, wherein the dispersing liquid comprises Fe(III)-sulfate in a concentration from 5-30 g/l, preferably 7-20 g/l, further bioorganic complexes of Fe³⁺ and exopolymers, wherein the exopolymers are produced extracellularly by the bacteria on the outer side of the bacterial cell membrane.

7. Process according to any of the preceding claims, wherein the ratio of the weight W_{M} of the heavy-metal alloys, hard-metal alloys, tungsten comprising material and/or hard-metal comprising material to the weight W_{L} of the dispersing liquid in step B) is 2.5 ≤ W_{M}/W_{L}≤ 3.0.

8. Process according to any of the preceding claims, wherein step D) includes the following steps:
| | |
|---|---|
| D1) | separating the solid material obtained in step C) |
| D2) | dispersing the solid material obtained after step D1), preferably in distilled water, and/or an aqueous acid solution, preferably aqueous sulfuric acid, |
| D3) | separating the solid material obtained after step D2) from wash water, preferably through sedimentation and/or centrifugation, wherein the sedimentation is performed for 15-40 h, preferably 20-30 h, and/or the centrifugation is performed with 2-1000 rcf, preferably 50-200 rcf, followed by decanting and replenishing washing fluid according to step D2), and |
| D4) | optionally repeating steps D2) and D3) 2-8 times, preferably 3-5 times. |

9. Process according to any of the preceding claims, wherein the dispersion obtained in step D2) is stirred for 150-350 h, preferably 200-240 h, most preferably 240 h, at a temperature in the range of 30-80 °C, preferably 40-60°C, most preferably 60 °C, to release from the solid material ions preferably selected from the group consisting of Ni-Fe, Ni-Fe-Cu, Co-Fe and/or lanthanoids.

10. Process according to any of the preceding claims, wherein the solid material obtained in steps C) and D) comprises 90-100 wt.-% particles of W or 90-100 wt.-% particles of WC, based on the total weight of the solid material, wherein the particles of W and/or WC in the solid material may have a number weighted average of 30-400 nm, preferably 50-250 nm and a distribution width of 10-200 nm, measured by laser diffraction. Further, the particles of W and/or WC in the liquid pulp may have a volume weighted average of 50-15000 nm, preferably 100-10000 nm and a distribution width of 100-10000 nm, measured by laser diffraction. Further, the particles of W and/or WC in the solid material may have a specific particle surface of 0.2-10 m²/g, preferably 0.2-8 m²/g, measured by BET method.

11. Process according to any of the preceding claims, which comprises an additional step selected from
I) dispersing the nanoparticles obtained according to claim 1 or claim 3 together with a thermoset polymer, preferably in the presence of additives such as dispersants or rheology agents, wherein the nanoparticles are present in an amount of 10 wt-% to 75 wt-%, preferably 25-50 wt.-%, based on a total weight of the dispersion mixture, or
J) mixing the nanoparticles obtained according to claim 1 or claim 3 with a thermoplastic polymer, in an extruder, at a temperature in the range of 200-250°C, and a rotation speed in the range of 300-400 rpm, wherein the nanoparticles are present in an amount of 10 wt-% to 75 wt-%, preferably 25-50 wt.-%, based on the total weight of the mixture.

12. Nanoparticles obtainable by a method according to any of claims 1-10, which have preferably a number weighted average of 30-400 nm, preferably 50-250 nm and a distribution width of 10-200 nm, measured by laser diffraction, and/or a weighted average of 50-15000 nm, preferably 100-10000 nm and a distribution width of 100-10000 nm, measured by laser diffraction, and/or a specific particle surface of 0.2-10 m²/g, preferably 0.2-8 m²/g, measured by BET method.

13. Nanoparticles according to claim 12, comprising 90-100 wt-% W, and optionally 1 wt-% S, and/or 1-3 wt-% Fe, and/or 1 wt-% Cr, and/or 1 wt-% Nb, and/or 1-2 wt-% Ti, and/or 1% Ni.

14. Plastic comprising a nanoparticle according to any of claims 12-13, in particular a thermosetting plastic or thermoplastic material.
